# FASCICULE DE BREVET EUROPEEN

(11) **EP 3 048 043 B1**
(45) Date de publication et mention de la délivrance du brevet: **21.06.2017**
(21) Numéro de dépôt: 16150958.3
(22) Date de dépôt: 12.01.2016
(51) Int. Cl.: B64C 25/40, F16H 13/02

(54) **PROCÉDÉ D'ENTRAÎNEMENT EN ROTATION D'UNE ROUE D AÉRONEF**
VORRICHTUNG ZUM DREHANTRIEB EINES LUFTFAHRZEUGRADS
METHOD FOR ROTATING AN AIRCRAFT WHEEL

(30) Priorité: 23.01.2015 FR 1550553
(43) Date de publication de la demande: 27.07.2016
(73) Titulaire: Safran Landing Systems, 78140 Vélizy-Villacoublay (FR)
(72) Inventeur: RODRIGUES, Fernand, 78140 VELIZY-VILLACOUBLAY (FR); MARTIN, Frédéric, 78140 VELIZY-VILLACOUBLAY (FR)
(74) Mandataire: Parzy, Benjamin Alain

(56) Documents cités:
- EP-A1- 2 527 249
- EP-A2- 0 339 977
- US-A- 3 005 510
- US-A- 3 762 670

## Description

L'invention concerne un procédé d'entraînement en rotation d'une roue d'aéronef.

### ARRIERE-PLAN TECHNOLOGIQUE DE L'INVENTION

Il a été proposé divers procédés pour entraîner une roue portée par un atterrisseur d'un aéronef. En particulier, il a été proposé d'entraîner la roue par un actionneur d'entraînement comportant un pignon de sortie qui engrène avec une couronne d'entraînement solidaire de la roue. Pour permettre la libre rotation de la roue, un dispositif d'embrayage est prévu entre le moteur d'entraînement et le pignon de sortie. Cependant, le pignon de sortie reste en permanence engrené avec la couronne d'entraînement, ce qui n'est pas favorable du point de vue de la sécurité.

Il a également été proposé d'utiliser un actionneur d'entraînement en rotation dont l'arbre de sortie porte un galet coopérant avec une piste d'entraînement solidaire de la roue. Cependant, cet agencement souffre de divers inconvénients. En particulier, pour des questions de sécurité, il faut pouvoir désolidariser le galet de la piste d'entraînement de la roue, ce qui impose de prévoir un actionneur mobile. Cette disposition est particulièrement difficile à mettre en oeuvre. En outre, le passage de la totalité du couple d'entraînement par un seul galet se révèle difficile. L'état de l'art est illustré par le document EP-A-2527249.

### OBJET DE L'INVENTION

L'invention vise à fournir des moyens d'entraînement en rotation d'une roue d'aéronef ne souffrant pas des inconvénients précités.

### PRESENTATION DE L'INVENTION

A cet effet, il est proposé un équipage d'entraînement en rotation par friction d'une roue d'aéronef équipée d'une piste d'entraînement et montée pour tourner autour d'un axe de rotation sur un essieu porté par une partie basse d'un atterrisseur d'aéronef, l'équipage comportant :
- une base destinée à être fixée à la partie basse de l'atterrisseur ;
- deux bras montés pivotants sur la base ;
- des galets montés à rotation à l'extrémité de chacun des bras, chaque galet étant associé à un pignon d'entraînement en rotation du galet ;
- un pignon central monté tournant selon l'axe de pivotement des bras, de sorte que les pignons d'entraînement des galets engrènent avec le pignon central ;
- des moyens d'actionnement agissant sur les bras de l'équipage pour les placer soit dans une position de dégagement dans laquelle les galets sont éloignés de la piste d'entraînement, soit dans une position d'engagement dans laquelle les galets sont maintenus en appui sur la piste d'entraînement sous un effort d'appui déterminé.

Un tel équipage garantit un appui égal des deux galets sur la piste au gré des déformations de celle-ci, sous un effort d'appui constant déterminé par l'effort des moyens d'actionnement. La gestion de l'écartement des bras permet de gérer l'engagement et le désengagement des galets, de façon très simple, sans qu'il soit nécessaire de prévoir un actionneur d'entraînement intégralement mobile. Celui-ci peut être fixe.

A cet effet, et selon un aspect particulier de l'invention, on propose un dispositif d'entraînement en rotation par friction d'une roue d'aéronef équipée d'une piste d'entraînement et montée pour tourner autour d'un axe de rotation sur un essieu porté par une partie basse d'un atterrisseur d'aéronef, le dispositif comportant :
- au moins un équipage d'entraînement disposé pour coopérer avec la roue à entraîner ;
- un actionneur d'entraînement en rotation solidaire de la partie inférieure de l'atterrisseur et ayant un arbre de sortie ;
- des moyens de transmission d'un mouvement de rotation entre l'arbre de sortie de l'actionneur d'entraînement et le pignon central de l'équipage.

De préférence, l'arbre de sortie de l'actionneur est monté tournant selon un axe de rotation parallèle aux axes de rotation des galets, les moyens de transmission comportant un élément souple d'entraînement sans fin, du type chaîne, courroie, câble ou similaire, enroulé autour d'un organe d'entraînement solidaire de l'arbre de sortie de l'actionneur d'entraînement, et autour d'un organe d'entraînement de l'arbre central de l'équipage.

### BREVE DESCRIPTION DES FIGURES

L'invention sera mieux comprise à la lumière de la description qui suit d'un mode particulier de réalisation de l'invention, en référence aux figures des dessins annexés, parmi lesquels :
- la figure 1 est une vue en perspective de la partie basse d'un atterrisseur d'aéronef (l'une des roues a été omise pour plus de clarté) équipé d'un dispositif d'entraînement selon l'invention à un équipage ;
- la figure 2 est une vue de côté de l'atterrisseur de la figure 1, montrant l'agencement de l'équipage relativement à la roue ;
- les figures 3a et 3b sont des schémas montrant les positions de désengagement et d'engagement des galets sur la piste d'entraînement de la roue ;

### DESCRIPTION DETAILLEE D'UN MODE DE REALISATION DE L'INVENTION

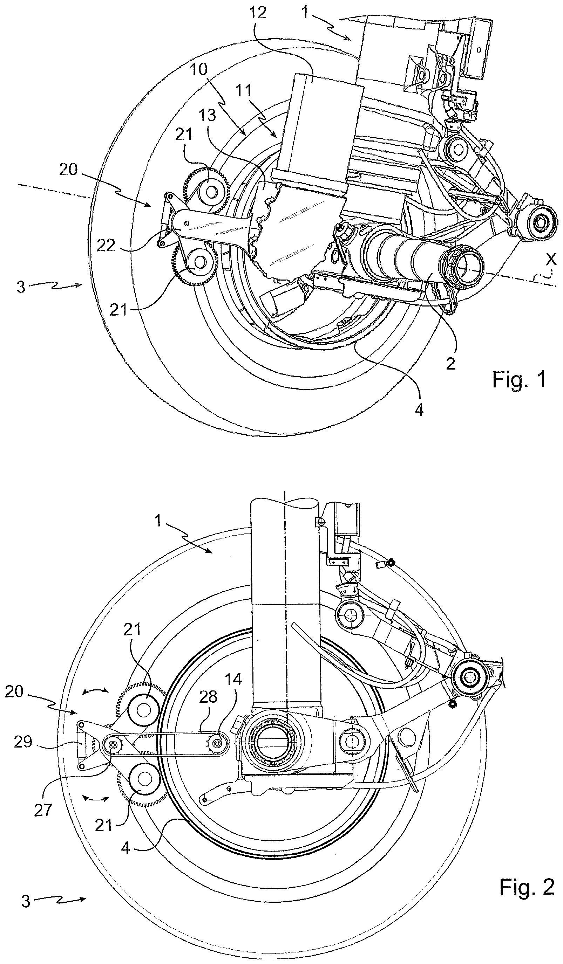

Comme cela est illustré aux figures 1 et 2, l'invention est applicable à un atterrisseur 1 d'aéronef portant un essieu 2 en sa partie basse pour recevoir des roues 3 (une seule est visible) et permettre sa rotation autour d'un axe de rotation X. Chacune des roues est ici équipée d'une piste d'entraînement 4 rapportée sur la jante de la roue. L'atterrisseur 1 est équipé d'un dispositif d'entraînement 10 selon l'invention comportant un actionneur d'entraînement 11 dont on voit ici le moteur électrique 12 associé à un réducteur 13 pour entraîner un arbre de sortie (non visible sur la figure 1, mais dont on distingue la roue de sortie 14 sur la figure 2). L'actionneur 11 est associé à un équipage 20, porté au bout d'une base 22 fixée sur la partie basse de l'atterrisseur, et comportant deux galets 21 destinés à venir coopérer avec la piste d'entraînement 4. On voit sur la figure 2 le positionnement de l'équipage 20 par rapport à la roue. Sur cette figure, la base 22 et l'actionneur d'entraînement 11 ont été ici omis pour plus de clarté.

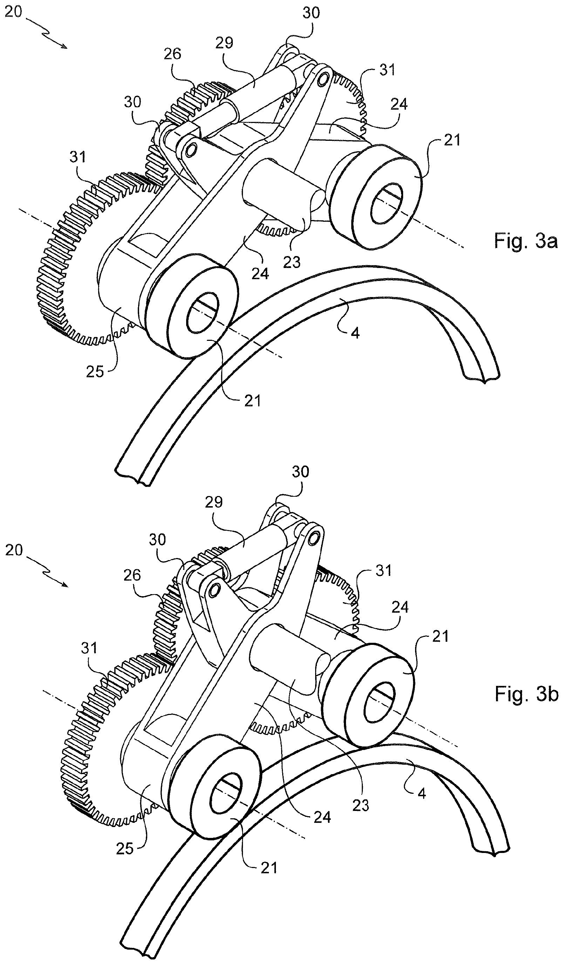

L'équipage 20 est illustré en détail aux figures 3a et 3b. Il comprend un axe central 23, monté pivotant à l'extrémité de la base 22 selon un axe parallèle à l'axe X. Des bras 24 sont montés pivotants en ciseaux directement sur l'axe central 23, qui fait donc office de pivot commun. Les bras 24 ont des extrémités 25 tournées vers la piste d'entraînement 4 qui portent des galets 21 montés à rotation selon des axes parallèles à l'axe X. Les galets 21 sont associés à des pignons d'entraînement 31 qui engrènent avec un pignon central 26 solidaire de l'axe central 23 qui ainsi, fait office d'arbre. Bien que l'axe central 23 soit ici représenté coupé pour plus de clarté, il porte en outre la roue d'entraînement 27 qui est visible à la figure 2. Une transmission, ici une chaîne 28 (également visible à la figure 2), s'étend entre la roue de sortie 14 de l'actionneur d'entraînement 11 et la roue d'entraînement 27, de sorte que les galets 21 puissent être entraînés en rotation par l'actionneur d'entraînement 11, quelle que soit la position angulaire des bras 24 autour de l'axe central 23.

Un actionneur de positionnement 29 est attelé entre les extrémités 30 des bras 24 opposées à celles portant les galets 21. A la figure 3a, l'actionneur de positionnement 29 est illustré à sa longueur maximale. Dans cette configuration, les galets 21 sont éloignés de la piste d'entraînement 4, de sorte que l'équipage 20 est en position de dégagement. L'actionneur de positionnement 29 est ici du type télescopique, et peut être indifféremment électrique ou hydraulique. A la figure 3b, l'actionneur de positionnement 29 est commandé pour exercer un effort constant tendant à rapprocher les bras 24 pour faire venir les galets 21 en contact avec la piste d'entraînement 4 et les maintenir dans cette position d'engagement sous un effort de contact déterminé. Dans cette position, l'actionneur de positionnement 29 n'est pas en butée interne, de sorte que les bras 24 peuvent s'écarter ou se rapprocher au gré des déformations de la piste d'entraînement dues au roulage de l'aéronef. De même, les bras sont libres angulairement pour accommoder toute déformation de la roue 3. On prévoira avantageusement des guides ou lames flexibles pour éviter tout balancement intempestif de l'équipage 20 lorsqu'il est en position de dégagement.

Ainsi, la structure du dispositif d'entraînement selon l'invention est très simple, avec un actionneur d'entraînement fixe, et une séquence d'actionnement particulièrement simple. Les éléments mobiles sont réduits au strict minimum. Aucun désaccouplement de la transmission n'est nécessaire.

L'invention n'est pas limitée à ce qui vient d'être décrit, mais englobe toute variante entrant dans le cadre défini par les revendications.

En particulier, bien qu'ici le dispositif d'entraînement comprenne un seul équipage, on pourra utiliser plusieurs équipages reliés à un même actionneur d'entraînement.

Bien que l'organe de transmission illustré ici soit une chaîne, il pourra s'agir plus généralement de tout élément souple sans fin, comme une courroie ou un câble disposé comme décrit ci-dessus, et, encore plus généralement, de tout organe de transmission comme par exemple une transmission par cardans.

Bien qu'ici les bras 24 soient montés en ciseaux sur un pivot commun, on pourra bien sûr monter les bras en écarteurs. Il conviendra alors d'inverser le sens d'action de l'actionneur. Par ailleurs, les bras peuvent être montés sur des pivots distincts.

Enfin, bien que sur l'exemple illustré, l'actionneur de positionnement soit disposé entre les bras, il pourra de façon plus générale être disposé sur l'équipage de façon à déplacer les galets entre la position d'engagement et la position de dégagement, tout en laissant une liberté angulaire de l'ensemble des deux bras pour accommoder toute déformation de la roue.

## Revendications

1. Equipage d'entraînement en rotation par friction d'une roue d'aéronef (3) équipée d'une piste d'entraînement (4) et montée pour tourner autour d'un axe de rotation sur un essieu (2) porté par une partie basse d'un atterrisseur d'aéronef, l'équipage comportant :
- une base (22) destinée à être fixée à la partie basse de l'atterrisseur ;
- deux bras (24) montés pivotants sur la base ;
- des galets (21) montés à rotation à l'extrémité de chacun des bras, chaque galet étant associé à un pignon d'entraînement en rotation (31) du galet ;
- un pignon central (26) monté tournant selon l'axe de pivotement des bras de sorte que les pignons d'entraînement des galets engrènent avec le pignon central ;
- des moyens d'actionnement (29) agissant sur les bras de l'équipage pour les placer soit dans une position de dégagement dans laquelle les galets sont éloignés de la piste d'entraînement, soit dans une position d'engagement dans laquelle les galets sont maintenus en appui sur la piste d'entraînement sous un effort d'appui déterminé.

2. Equipage selon la revendication 1, dans lequel les moyens d'actionnement comprennent un actionneur de positionnement (29) attelé entre des extrémités des bras (24) opposées à celles portant les galets (21).

3. Equipage selon la revendication 1, dans lequel les bras sont montés en ciseaux sur un pivot commun (23).

4. Equipage selon la revendication 3, dans lequel le pivot commun est constitué d'un arbre associé au pignon central.

5. Dispositif d'entraînement en rotation par friction d'une roue d'aéronef équipée d'une piste d'entraînement et montée pour tourner autour d'un axe de rotation sur un essieu porté par une partie basse d'un atterrisseur d'aéronef, le dispositif comportant :
- au moins un équipage d'entraînement (20) selon la revendication 1 disposé pour coopérer avec la roue à entraîner ;
- un actionneur d'entraînement (11) en rotation solidaire de la partie inférieure ayant un arbre de sortie (14) ;
- des moyens de transmission (28) d'un mouvement de rotation entre l'arbre de sortie de l'actionneur d'entraînement au pignon central (26) de l'équipage.

6. Dispositif d'entraînement selon la revendication 5, dans lequel l'arbre de sortie de l'actionneur est monté tournant selon un axe de rotation parallèle aux axes de rotation des galets, les moyens de transmission comportant un élément souple d'entraînement sans fin (28), du type chaîne, courroie, câble ou similaire, enroulé autour d'un organe d'entraînement (14) solidaire de l'arbre de sortie de l'actionneur d'entraînement, et autour d'un organe d'entraînement (27) associé au pignon central de l'équipage.

## Patentansprüche

1. Drehantriebsanordnung zum Drehantrieb eines Luftfahrzeugrades (3) mittels Reibung, wobei das Rad mit einer Antriebsbahn (4) ausgestattet und drehbar um eine Rotationsachse auf einer Radachse (2) gelagert ist, die von einem unteren Teil eines Luftfahrzeugfahrwerks getragen wird, wobei die Anordnung umfasst:
- eine Basis (22), die dazu bestimmt ist, an dem unteren Teil des Fahrwerks befestigt zu werden;
- zwei Arme (24), die schwenkbar an der Basis gelagert sind;
- Rollen (21), die am Ende jedes der Arme drehbar gelagert sind, wobei jede Rolle mit einem Drehantriebsritzel (31) zum Drehantrieb der Rolle verbunden ist;
- ein zentrales Ritzel (26), das derart drehbar um die Schwenkachse der Arme gelagert ist, dass die Antriebsritzel zum Antrieb der Rollen mit dem zentralen Ritzel in Eingriff stehen;
- Betätigungsmittel (29), die auf die Arme der Anordnung einwirken, um sie entweder in einer ausgerückten Position anzuordnen, in der die Rollen von der Antriebsbahn entfernt sind, oder in einer Eingriffsposition, in der die Rollen unter einer vorgegebenen Auflagekraft in Anlage an der Antriebsbahn gehalten werden.

2. Anordnung nach Anspruch 1, bei der die Betätigungsmittel einen Positionsaktor (29) umfassen, der zwischen den Enden der Arme (24), die denjenigen gegenüberliegen, die die Rollen (21) tragen, gekoppelt ist.

3. Anordnung nach Anspruch 1, bei der die Arme scherenartig an einem gemeinsamen Zapfen (23) gelagert sind.

4. Anordnung nach Anspruch 3, bei der der gemeinsame Zapfen aus einer Welle gebildet ist, die mit dem zentralen Ritzel verbunden ist.

5. Drehantriebsvorrichtung zum Drehantrieb eines Luftfahrzeugrades mittels Reibung, wobei das Rad mit einer Antriebsbahn ausgestattet und drehbar um eine Rotationsachse auf einer Radachse gelagert ist, die von einem unteren Teil eines Luftfahrzeugfahrwerks getragen wird, wobei die Vorrichtung umfasst:
- mindestens eine Antriebsanordnung (20) nach Anspruch 1, die angeordnet ist, um mit dem anzutreibenden Rad zusammenzuwirken;
- einen fest mit dem unteren Teil verbundenen Drehantriebsaktor (11), der eine Abtriebswelle (14) hat;
- Übertragungsmittel (28) zur übertragung einer Drehbewegung zwischen der Abtriebswelle des Antriebsaktors und dem zentralen Ritzel (26) der Anordnung.

6. Antriebsvorrichtung nach Anspruch 5, bei der die Abtriebswelle des Alktors drehbar um eine Rotationsachse gelagert ist, die parallel zu den Rotationsachsen der Rollen ist, wobei die Übertragungsmittel ein endloses flexibles Antriebselement (28) der Art Kette, Riemen, Kabel oder dergleichen umfassen, das um ein fest mit der Abtriebswelle des Antriebsaktors verbundenes Antriebsorgan (14) und um ein Antriebsorgan (27) gewickelt ist, das mit dem zentralen Ritzel der Anordnung verbunden ist.

## Claims

1. An assembly for rotationally friction driving the wheel of an aircraft (3) provided with a driving track (4) and so mounted as to rotate about an axis of rotation on an axle (2) carried by the lower part of an aircraft landing gear, with the assembly comprising:
- a base (22) intended to be fixed to the lower part of the landing gear;
- two arms (24) mounted to pivot on the base;
- rollers (21) so mounted as to rotate at the end of each arm, with each roller being associated with a pinion for rotationally driving (31) the roller;
- a central pinion (26) so mounted as to rotate along the arms pivot axis so that the rollers driving pinions engage with the central pinion;
- actuating means (29) so acting on the arms of the assembly as to position same either in a disengaged position in which the rollers are separated from the drive track, or in an engaged position in which the rollers are held to rest on the drive track with a predetermined bearing force.

2. An assembly according to claim 1, wherein the actuating means comprise a positioning actuator (29) coupled between ends of the arms (24) facing the ones supporting the rollers (21).

3. An assembly according to claim 1, wherein the scissors-mounted arms have a common pivot (23).

4. An assembly according to claim 3, wherein the common pivot consists of a shaft associated with the central pinion.

5. A device for rotationally friction driving the wheel of an aircraft provided with a driving track and so mounted as to rotate about an axis of rotation on an axle carried by the lower part of an aircraft landing gear, with the device comprising:
- at least one driving assembly (20) according to claim 1, so positioned as to cooperate with the wheel to be driven;
- a rotational driving actuator (11) integral with the lower part having an output shaft (14);
- means for transmitting (28) a rotation motion between the output shaft of the driving actuator and the central pinion (26) of the assembly.

6. A driving device according to claim 5, wherein the actuator output shaft is so mounted as to rotate along an axis of rotation parallel to the axes of rotation of the rollers, with the transmission means comprising a flexible endless driving element (28), of the chain, belt, cable type or similar, wound around a driving member (14) integral with the output shaft of the driving actuator, and around a driving member (27) associated with the central pinion of the assembly.
